# EUROPEAN PATENT APPLICATION

(11) **EP 3 643 738 A1**
(43) Date of publication of application: **29.04.2020**
(21) Application number: 18202601.3
(22) Date of filing: 25.10.2018
(51) Int. Cl.: C08J 9/00, C08J 9/10, C08L 15/02, C08L 23/08, C08L 31/02, C08L 33/14

(54) **NEW FOAM WITH IMPROVED EXPANSION BEHAVIOUR WHEN USED IN THIN LAYERS**

(71) Applicant: SIKA TECHNOLOGY AG, 6340 Baar (CH)
(72) Inventor: Marfinati, Artur, 09820-640 Sao Bernardo do Campo - SP (BR); Silvero, Diogo Emilio, 01531-001 Sao Paulo (BR)
(74) Representative: Sika Patent Attorneys

(57) **Abstract**

Disclosed is a thermally expandable composition, comprising
(a) at least one polymer **P,** cross-linkable by a free-radical initiator, and
(b) at least one solid butyl rubber **BR,** and
(c) at least one free-radical initiator, and
(d) at least one blowing agent, and
(e) at least one tackifier **TA,**
whereby the cured expanded composition has a volume increase compared to the uncured composition of less than 1300%.

The thermally expandable composition is able to provide good expansion behaviour and good adhesion on metal surfaces and is especially suitable for baffle and/or reinforcement elements, e.g. in automotive manufacturing.

## Description

### Technical Field

The present invention relates to a thermally expandable composition as well as a baffle element for hollow structures comprising such a thermally expandable composition, a process for manufacturing such a baffle element, its use to seal or baffle a hollow structure, and a method for sealing or baffling a hollow structure.

### Background of the Invention

Manufactured products often contain orifices and cavities or other hollow parts that result from the manufacturing process and/or that are designed into the product for various purposes, such as weight reduction. Automotive vehicles, for example, include several such orifices and cavities throughout the vehicle, including in the vehicle's structural pillars and in the sheet metal of the vehicle doors. It is often desirable to seal such orifices and cavities so as to minimise noise, vibrations, fumes, dirt, water, humidity, and the like from passing from one area to another within the vehicle by means of sealing members built into the orifice or cavity.

Such elements used for sealing or baffling often consist of a carrier, made of plastic, metal, or another rigid material, and one or more layers of a thermoplastic material attached to it which is able to expand its volume when heat or another physical or chemical form of energy is applied.

Using an adequate design, it is possible to insert the baffle or reinforcement element into the hollow part of the structure during the manufacturing process but also to leave the inner walls of the structure still accessible (or the cavities passable) by e.g. a liquid. For example, during the manufacture process of a vehicle, the hollow parts of a metal frame can still be largely covered by an electro-coating liquid while the baffle elements are already inserted, and afterwards during a heat treatment step, the expandable thermoplastic material of the baffle element expands to fill the cavities as intended.

However, it can be difficult to place such elements comprising a carrier at regions in a car body that are not easy to be reached/accessed. Self-adhering sheet-like thermoplastic material is preferably used in such cases. Adhesion to the substrate can be safeguarded by an additional adhesive layer on the thermoplastic material, however especially on uneven substrates, delamination of the adhesion layer from the thermoplastic material often occurs.

The development of such baffles elements has led to highly advanced systems, where the expandable material is able to increase its volume by up to 1800% or more, forming a foam-like structure that fills the cavities and adhering to the walls of the structure intended to be sealed or baffled. However, for small cavities such high expanding materials can lead to undesired spilling out/overflowing of the foam during the foaming process outside of the cavities to be filled. Further, the cell structure and the expansion behaviour in compositions with high expansion rates sometimes are of insufficient quality, like poor cell structure, wavy foam surface and irregular/non-directed foam expansion.

Currently employed thermally expandable compositions often consist of polymers that can be cross-linked by peroxides, such as ethylene-vinyl acetate polymers, in combination with comparably small, highly functional acrylates which are incorporated into the cross-linked network upon curing. These compositions furthermore contain blowing agents. Under activation conditions, such as elevated temperature, curing of the cross-linkable network takes place, while simultaneously the blowing agent decomposes and releases gases. Such a system is for example disclosed in DE 10 2011 080 223 A1.

It is thus desirable to obtain a thermally expandable composition that does not suffer from these limitations and exhibits good expansion behaviour with respect to:
- preferably good foam cell structure/ heat stable foam structure
- low buckling and an
- preferably uniform expansion pattern/ directed expansion,
especially when used in small cavities, especially in cavities formed by the boundary of opposite side walls spaced 4 - 150 mm, 20 - 100 mm, preferably 40 - 80 mm, apart.

The composition should provide good adhesion on metal substrates, especially oiled metal substrates, of the uncured composition, especially on uneven, bent or edged surfaces. The adhesion should be guaranteed both before and after the expansion of the thermoplastic material.

### Summary of the Invention

It is an object of the present invention to provide a thermally expandable composition that exhibits good expansion behaviour with respect to:
- preferably good foam cell structure/ heat stable foam structure
- low buckling and an
- preferably uniform expansion pattern/ directed expansion,
especially when used in small cavities. The composition should also provide good adhesion on metal substrates, especially oiled metal substrates, of the uncured composition, especially on uneven, bent or edged surfaces. The adhesion should also be guaranteed both before and after the expansion of the thermoplastic material.

Surprisingly, the present invention provides a solution to that problem by providing a thermally expandable composition, comprising
(a) at least one polymer **P,** cross-linkable by a free-radical initiator, and
(b) at least one solid butyl rubber **BR,** whereby the composition comprises said solid butyl rubber with an amount of between 5 wt.-% and 16 wt.-%, preferably between 5 wt.-% and 15 wt.-%, 6 wt.-% and 12 wt.-%, 8 wt.-% and 10 wt.-%, based on the total weight of the composition, and
(c) at least one free-radical initiator, and
(d) at least one blowing agent, whereby the composition preferably comprises said blowing agent with an amount of less than 6 wt.-%, preferably between 1 wt.-% and 5.5 wt.-%, 2 wt.-% and 5 wt.-%, and
(e) at least one tackifier **TA.**

The cured expanded composition has a volume increase compared to the uncured composition of less than 1300%, preferably between 500 - 1300%, more preferably 600 - 1200 %, 800 - 1200%, most preferably 900 - 1100%, whereby the volume increase is determined using the DIN EN ISO 1183 method of density measurement (Archimedes principle).

The composition according to the present invention is particularly suitable to be used in a sealing or baffle element, for example in automotive applications. Further aspects of the present invention are subject of other independent claims. Preferred embodiments of the invention are subject of dependent claims.

### Detailed Description of the Invention

The unit term "wt.-%" means percentage by weight, based on the weight of the respective total composition, if not otherwise specified. The terms "weight" and "mass" are used interchangeably throughout this document.

The term "functionality" in connection with a molecule describes in this document the number of chemical functional groups per molecule. The term "polyfunctional" describes a molecule with more than 1 functional groups of a given type. For example, a polyfunctional acrylate with a functionality of 3 describes a molecule with 3 acrylate groups. The term "average functionality" is used if a mixture of molecules is present that differ slightly in individual functionality, but in average exhibit a given functionality, as it is sometimes the case with technical grade chemicals.

The term "radical" used in this document describes, as known to a person with ordinary skill in the art of chemistry, a chemical species with an unpaired valence electron. The cross-linking reactions involved in the curing or hardening of the polymer system of the present invention follow a radical mechanism.

Melt flow index (MFI) is determined by the ASTM D1238 standard method, using a capillary rheometer at 190°C and a weight of 2.16 kg. MFI values describe the amount of polymer coming out of the capillary under pressure of the defined weight and at the defined temperature during a given time. The cured expanded composition has a volume increase compared to the uncured composition of less than 1300%, preferably between 500 - 1300%, more preferably 600 - 1200 %, 800 - 1200%, most preferably 900 - 1100%, whereby the volume increase is determined using the DIN EN ISO 1183 method of density measurement (Archimedes principle).

Preferably the volume increase of the expanded and cured composition compared to the uncured and unexpanded composition is determined using the DIN EN ISO 1183 method of density measurement (Archimedes principle) in deionised water in combination with sample mass determined by a precision balance.
More preferably, the values for volume increase (expansion) are determined as mentioned in the experimental section and the composition is cured for 20 min at 180°C, preferably as mentioned in the experimental section.

Such a volume increase has the advantage of improved quality of the foam structure as well as a regular and directed expansion behaviour. Surprisingly it was found that compositions expanding more than 1500% exhibit a decrease in the quality of the foam structure as well as wavy foam surface and irregular/non-directed foam expansion. This can be seen for example in example R3.

Preferably, the uncured composition is tacky at room temperature, more particularly, after the surface of the uncured composition has been pressed with a thumb, exerting a pressure of 5 kg for 1 second, an uncured composition having an intrinsic weight of 50 g can be lifted up for at least 5 seconds.

It is further advantageous if the cured and expanded composition regains more than 80 %, preferably more than 90, more than 95, most preferably more than 98 %, of its original volume, if pressure by pressing with a thumb, was applied on the foam, exerting a pressure of 5 kg for 1 second at room temperature.

It is further preferred if the expandable composition has a consistence according to JIS K 6830 of less than 30 1/10mm, preferably between 5 - 25 1/10mm, between 7.5 -20 1/10mm, between 10 - 15 1/10mm. Such a consistence is advantageous for handling and transport of the material, especially for keeping its shape as a baffle element.

The present invention comprises as a first necessary component at least one polymer **P** that is cross-linkable by a free-radical initiator. Principally all thermoplastic polymers or thermoplastic elastomers capable of cross-linking reactions with a free-radical initiator are suitable. The artisan skilled in the field describes polymers as "cross-linkable by a free-radical initiator" if these polymers contain functional groups, e.g. C-C single bonds or C-C double bonds, which release hydrogen atoms under influence of a radical starter, e.g. a peroxide, from their backbone or side chain, such that a radical remains that is able to radically attack other polymer chains in a subsequent step, leading to a radical chain reaction cross-linking process and ultimately to a polymer network.

Suitable polymers **P** include, for example, styrene-butadiene copolymers, styrene-isoprene copolymers, ethylene-vinyl acetate copolymers, ethylene-methacrylate copolymers, ethylene-ethyl acrylate copolymers, ethylene butyl acrylate copolymers, ethylene-(meth)acrylic acid copolymers, ethylene-2-ethylhexyl acrylate copolymers, ethylene-acrylic ester copolymers, polyolefinc block copolymers, and polyolefins such as polyethylene or polypropylene.
The copolymers, meaning polymers made from more than one type of monomer, can be block type copolymers or random copolymers.
Polymers **P** can also be further functionalised, meaning they can contain further functional groups such as hydroxyl, carboxy, anhydride, acrylate, and/or glycidylmethacrylate groups.

Preferred for the present invention is one or more polymer **P** with an average melt flow index (MFI) of between 1 and 200 g/10 min, preferably between 10 and 100 g/10 min, more preferably between 25 and 75 g/10 min, most preferably between 35 and 55 g/10 min.

Polymer **P** preferably comprises or essentially consists of ethylene-vinyl acetate (EVA). In this case, the content of vinyl acetate monomers in EVA should be between 8 and 45 wt.-%, preferably between 15 and 30 wt.-%, based on the total weight of the EVA polymer.

In cases where more than one type of polymer is used, the individual MFI combine to an average MFI of the used polymer mixture, which has to be determined according to ASTM D1238.

The thermally expandable composition according to the present invention preferably contains said at least one polymer **P** with an amount of between 50 and 90 wt.-%, preferably between 60 and 80 wt.-%, more preferably between 70 and 80 wt.-%, based on the weight of the total composition.

In a preferred embodiment, more than one type of polymer is used as polymer **P.** It was found to be beneficial for the properties of the inventive composition to use at least two types of polymer (herein named P1 and P2) with different melt flow index (MFI), one much higher than the other. For example, an especially preferred embodiment uses a first polymer **P1** with an MFI of between 100 and 200 g/10 min and a second polymer **P2** with an MFI of between 0.1 and 60 g/10 min, preferably between 0.1 and 10 g/10 min, preferably with a weight ratio of the two polymers P1 : P2 in the composition of 0.2 to 0.9, preferably 0.4 to 0.7.

Preferred EVA polymers include, e.g., Elvax® 150, Elvax® 240A, Elvax® 260A, Elvax® 420A (all by DuPont), or the corresponding Evatane® copolymers (by Arkema).

In more preferred embodiment, the inventive composition also includes a polymer **P3,** which is an ethylene-glycidyl methacrylate copolymer, such as Lotader® ADX 1200S, Lotader® AX8840, Lotader® 3210, Lotader® 3410 (by Arkema) or Lotryl® copolymers (by Arkema).

This polymer **P3** is preferably used in compositions according to the present invention with an amount of between 2 and 10 wt.-%, preferably between between 4 and 10 wt.-%, more preferably between 5 and 7 wt.-%, based on the total weight of the composition.

The second essential component of the present inventive composition is at least one solid butyl rubber **BR.**
The composition comprises said solid butyl rubber with an amount of between 5 wt.-% and 16 wt.-%, preferably between 5 wt.-% and 15 wt.-%, 6 wt.-% and 12 wt.-%, 8 wt.-% and 10 wt.-%, based on the total weight of the composition.
The terms "butyl rubber" is intended to mean a polymer prepared by reacting a major portion of an isoolefin monomer with a minor portion of a multiolefin monomer.

Preferably, the butyl rubber comprises a copolymer of a C4 to C8 monoolefin monomer and a C4 to C14 multiolefin monomer.

The preferred C4 to C8 monoolefin comprises an isomonoolefin. Non-limiting examples of useful monoolefin monomers may be selected from the group comprising isobutylene, 2-methyl-1-butene, 3-methyl-1-butene, 2-methyl-2-butene, 4-methyl-1-pentene and mixtures thereof.

The preferred C4 to C14 multiolefin comprises a C4 to C10 conjugated diolefin. Non-limiting examples of useful conjugated diolefins may be selected from the group comprising isoprene, butadiene, 2,4-dimethylbutadiene, piperyline, 3-methyl-1,3-pentadiene, 2,4-hexadiene, 2-neopentyl-1,3-butadiene, 2-methyl-1,5-hexadiene, 2,5-dimethyl-2,4-hexadiene, 2-methyl-1,4-pentadiene, 2-methyl-1,6-heptadiene, cyclopentadiene, methylcyclopentadiene, cyclohexadiene, 1-vinyl-cyclohexadiene and mixtures thereof.

The butyl rubber may be derived from a mixture comprising from about 70 to about 99.5 parts by weight of the C4 to C8 monoolefin monomer and from about 30 to about 0.5 parts by weight of the C4 to C14 multiolefin monomer. More preferably, the butyl rubber is derived from a mixture comprising from about 80 to about 99.5 parts by weight of the C4 to C8 monoolefin monomer and from about 20 to about 0.5 parts by weight of the C4 to C14 multiolefin monomer.

The most preferred butyl rubber is derived from a mixture comprising from about 97 to about 99.5 parts by weight of isobutylene and from about 3 to about 0.5 parts by weight of isoprene.

It is possible to include an optional third monomer to produce a butyl terpolymer. For example, it is possible to include a styrenic monomer in the monomer mixture, preferably in an amount up to about 15 percent by weight of the monomer mixture. The preferred styrenic monomer may be selected from the group comprising p-methylstyrene, styrene, α-methylstyrene, p-chlorostyrene, p-methoxystyrene, indene, indene derivatives and mixtures thereof. The most preferred styrenic monomer may be selected from the group comprising styrene, p-methylstyrene and mixtures thereof. Other suitable copolymerizable termonomers will be apparent to those of skill in the art.

It is particularly preferred if the at least one solid butyl rubber **BR** is a halogenated butyl rubber, preferably a chlorinated butyl rubber or a brominated butyl rubber, especially preferred a brominated butyl rubber.

Preferably, the halogenated butyl rubber comprises a halogen in the amount of from about 0.1 to about 8% by weight of the rubber. More preferably, the halogenated butyl rubber comprises a halogen in the amount of from about 0.5 to about 4% by weight of the rubber. Most preferably, the halogenated butyl rubber comprises a halogen in the amount of from about 1.5 to about 3.0% by weight of the rubber.

The viscosity of the halogenated elastomer is preferably less than 65 MU as measured by Mooney Viscosity using ASTM test method D 1646 (ML (1+8) 125°). The viscosity may be less than 45 MU or even less than 35 MU.

Preferably, the solid butyl rubber **BR** is included in the present inventive composition with an amount of between 5 wt.-% and 15 wt.-%, 6 wt.-% and 12 wt.-%, preferably 8 wt.-% and 10 wt.-%, based on the total weight of the composition.

The before mentioned solid butyl rubber **BR** lead to good adhesion on metal substrates, especially oiled metal substrates, of the uncured composition. Further, they lead to uniform/even horizontal and vertical expansion and to a reduction in buckling of the foamed compositions as well as cohesive fracture patterns of the cured/foamed compositions. This can be seen in the comparison of example E1 with R1.

Compositions with an amount of solid butyl rubber with an amount of less than 5 wt.-% have insufficient adhesion on metal substrates, especially oiled metal substrates, inferior foam cell structure as well as wavy surfaces. This can be seen in example R4.
Compositions with an amount of solid butyl rubber with an amount of more than 16 wt.-% show adhesive fracture patterns on metal substrates, especially oiled metal substrates, wavy surfaces and non-uniform/non-even vertical expansion. This can be seen in example R5.

A third necessary component of the thermally expandable composition according to the present invention is at least one free-radical initiator, preferably with an amount of between 0.5 and 5 wt.-%, preferably between 1 and 4 wt.-%, more preferably between 1.5 and 3 wt.-%, even more preferably between 2 and 2.5 wt.-%, based on the total weight of the composition.

Preferably, the free-radical initiator is a peroxide or a perester, more preferably a peroxide. It is advantageous for the inventive composition to use a peroxide that is inert at room temperature (23°C) and exhibits an activation temperature suitable for the intended purpose. For example, if the composition is used for a baffle element in automotive manufacturing, an activation temperature of between 130 and 250°C is preferred. Furthermore, it is advisable to select a peroxide with an activation temperature compatible with the decomposition temperature of the blowing agent. If those two temperatures differ too much, it may be more difficult to obtain a thermally expandable composition with optimal performance and stability. Apart from that, other, at room temperature solid components have to be compatible with these components as well, for example in terms of softening or melting point.

Preferred peroxides for the inventive composition are organic peroxides, such as keton peroxides, diacyl peroxides, peresters, perketals, and hydroperoxides. Examples of such preferred peroxides include cumene hydroperoxide, t-butyl peroxide, bis(t-butylperoxy)-diisopropyl benzene, di(t-butylperoxy isopropyl) benzene, dicumyl peroxide, t-butylperoxy benzoate, di-alkylperoxy dicarbonate, diperoxyketals (such as 1,1-di-t-butylperoxy-3,3,5-trimethyl cyclohexane), keton peroxides (such as methyl ethyl keton peroxide), and 4,4-di-t-butylperoxy-n-butyl valerate.

Especially preferred are 3,3,5,7,7-pentamethyl-1,2,4-trioxepane, 2,5-dimethyl-2,5-di(t-butylperoxy)-3-hexyne, di-t-butyl peroxide, 2,5-dimethyl-2,5-di(t-butylperoxy) hexane, t-butyl cumyl peroxide, di(t-butylperoxy isopropyl) benzene, dicumyl peroxide, butyl-4,4-di(t-butylperoxy) valerate, t-butylperoxy-2-ethylhexyl carbonate, 1,1-di(t-butylperoxy)-3,3,5-trimethyl cyclohexane, t-butylperoxy benzoate, di(4-methylbenzoyl) peroxide, and dibenzoyl peroxide.

Most preferred peroxides for the present inventive composition include dicumyl peroxide, available for example under the trade names Perkadox® BC-40B-PD by Akzo Nobel or Peroxan® DC-40 PK by Pergan and/or di(t-butylperoxyisopropyl) benzene, available for example under the trade names Perkadox® 14-40B-PD by Akzo Nobel or Peroxan® BIB-40 P by Pergan, wherein di(t-butylperoxyisopropyl) benzene is especially preferred.

It may be advantageous for the present invention to use peroxide that is immobilised on a support material, such as silica, kaolin, and/or calcium carbonate, or other suitable materials. This approach may facilitate handling, dosage, and evenly distribution of the peroxide in the composition. Examples for such immobilised peroxide include Perkadox® BC-40B-PD by Akzo Nobel (40 wt.-% dicumyl peroxide on calcium carbonate) or Perkadox® 14-40K-PD by Akzo Nobel (40 wt.-% di(t-butylperoxyisopropyl) benzene on clay and silica).

The fourth essential component of the present inventive composition is at least one blowing agent.

A suitable blowing agent may be a chemical or physical blowing agent. Chemical blowing agents are organic or inorganic compounds that decompose under influence of, e.g., temperature or humidity, while at least one of the formed decomposition products is a gas. Physical blowing agents include, but are not limited to, compounds that become gaseous at a certain temperature. Preferably, the blowing agent is a chemical blowing agent.

Preferred chemical blowing agents include but are not limited to azo compounds, hydrazides, nitroso compounds, carbamates, and carbazides.

Suitable chemical blowing agents are, e.g., azodicarbonamide, azoisobutytronitrile, azocyclohexyl nitrile, dinitrosopentamethylene tetramine, azodiamino benzene, benzene-1,3-sulfonyl hydrazide, calcium azide, 4,4'-diphenyldisulphonyl azide, p-toluenesulphonyl hydrazide, p-toluenesulphonyl semicarbazide, 4,4'-oxybis(benzenesulphonylhydrazide), trihydrazino triazine, and N,N'-dimethyl-N,N'-dinitrosoterephthalamide, and combinations thereof and the like.

Also suitable are dual chemical systems, such as acid/base systems that generate gases upon reaction. One preferred example is sodium hydrogen carbonate and citric acid, a system that generates carbon dioxide when combined in a suitable medium.

Suitable physical blowing agents include expandable microspheres, consisting of a thermoplastic shell filled with thermally expandable fluids or gases. An example for such suitable microspheres are Expancel® microspheres (by AkzoNobel).

In a preferred embodiment, the blowing agent comprises or consists of one or several selected from the list of azodicarbonamide, Expancel® microspheres, and 4,4'-oxybis(benzenesulphonylhydrazide), most preferably azodicarbonamide.

Preferably, the blowing agent, preferably azodicarbonamide, is included in the present inventive composition with an amount of between 2.5 wt.-% and 6 wt.-%, preferably between 3 wt.-% and 5.5 wt.-%, between 3.5 wt.-% and 5 wt.-%, between 4 wt.-% and 5 wt.-%, most preferably between 4.5 wt.-% and 5 wt.-%, based on the total weight of the composition.

Such an amount, especially if the blowing agent is azodicarbonamide, provides the advantage of improved quality of the foam structure as well as a uniform/even expansion behaviour.
Compositions expanding more than 1300% exhibit a decrease in the quality of the foam structure as well as non-uniform/non-even horizontal and vertical expansion behaviour. This can be seen for example in the comparison of example E1 and example E6 with example R3.

The heat required for the decomposition reaction that causes the foaming (expansion) can be applied externally or internally, the latter e.g. from an exothermic reaction. Preferably, the blowing agent is activated (i.e. decomposes under gas release) at a temperature of less than 160°C, especially between 80°C to 150°C, more preferably between 90°C and 140°C.

If the present inventive thermally expandable composition finds a use in a baffle element, e.g. in automotive manufacturing, it is preferable that the activation temperature of the blowing agent is adjusted to the manufacturing conditions of the automotive part to be baffled. As an example, the baffle element can be inserted into a cavity of a structure that needs to be treated by an electrocoating liquid, in its unexpanded state still leaving the surface of the structure accessible, and subsequently, during the heat treatment of the automotive part (i.e. the curing procedure for the electrocoating liquid), the baffle element simultaneously (or shortly thereafter) expands to its intended final shape and at least partially closes or fills the cavity. In such a case, the expansion temperature should correspond to the temperature conditions of said heat treatment, i.e. to between 90°C and 200°C.
Accordingly, it is advisable to select the free-radical initiator, preferably the peroxide, used in the inventive composition in such a way that its activation temperature is in the same range, or slightly below the decomposition temperature of the blowing agent. This ensures that the radical mechanisms leading to polymer cross-linking take place at a point which enables the formation of a stable, foam-like structure.

The fifth essential component of the present inventive composition is at least one tackifier **TA.**

Preferably, the term "tackifier" in the present document is defined as a compound as described as a tackifier in the Römpp Chemie Lexikon, online version, Georg Thieme Verlag, retrieved on 08 October 2018.

Such tackifier **TA** lead to good adhesion on metal substrates, especially oiled metal substrates, both before and after foaming of the composition. Further, they are advantageous in providing uniform/even expansion behaviour, in the reduction of buckling of the foamed compositions as well as providing a cohesive fracture patterns of the cured/foamed compositions. This can be seen in the example R2.

Preferably, the tackifier **TA** is a hydrocarbon resin, preferably a aromatically modified hydrocarbon resin, most preferably a aromatically modified C5 hydrocarbon resin.

The before mentioned tackifier **TA** lead to good adhesion on metal substrates, especially oiled metal substrates, of the non-foamed composition. Further, they are advantageous in providing uniform/even horizontal expansion behaviour. This can be seen in the example E2.

Examples of hydrocarbon resins are for example Novares® TL 90 available from Rütgers, Germany, Wingtack® resins (by Cray Valley), Escorez® tackifying resins (e.g., Escorez® 1304, by ExxonMobil), and Piccotac® hydrocarbon resins (e.g., Piccotac® 1100 or Piccotac® 1100E, by Eastman).

Preferably, the composition comprises said tackifier **TA** in an amount of between 12 wt.-% and 30 wt.-%, 14 wt.-% and 25 wt.-%, 16 wt.-% and 22 wt.-%, preferably 17.5 wt.-% and 20 wt.-%, based on the total weight of the composition.

Such an amount, especially if the tackifier **TA** is a hydrocarbon resin, provides the advantage of a reduction of the buckling of the foamed compositions. This can be seen in the example E3.

It is further preferred if the thermally expandable composition contains at least one process oil **PO** selected from the group consisting of aromatic oil, naphthenic oil or poly(iso)butylene, preferably poly(iso)butylene, most preferably polyisobutylene.
The before mentioned process oil **PO** further provides the advantage of improved quality of the foam structure as well as a uniform/even horizontal and vertical expansion behaviour. This can be seen in the comparison of the example E1 and the example E4 with example E5.

Preferably the composition comprises said process oil **PO** with an amount of between 18 wt.-% and 35 wt.-%, preferably between 20 wt.-% and 32 wt.-%, most preferably between 25 wt.-% and 30 wt.-%, based on the total weight of the composition.

It was surprisingly found that such an amount of process oil **PO** lead to a good adhesion on metal substrates, especially oiled metal substrates, before foaming of the composition. This can be seen in the comparison of the example E1 with the example E4.

It is further preferred if the thermally expandable composition contains at least one acrylate **A,** preferably with an amount of between 0.1 and 1 wt.-%, preferably between 0.2 and 0.8 wt.-%, more preferably between 0.3 and 0.5 wt.-%, based on the total weight of the composition.

Acrylate **A** preferably has a molecular weight of less than 2'500 g/mol, more preferably less than 1'000 g/mol, and preferably exhibits an acrylate functionality of at least 2, of at least 3, more preferably between 3 and 5.

Although polymer **P** (described above) can comprise acrylate functions, it is beneficial for the inventive composition that these two components are not the same chemical compound. In comparison, acrylate **A** is generally smaller than polymer **P** in terms of molecular weight.

Preferred acrylates **A** with a functionality of 2 include ethylene glycol dimethacrylate, diethylene glycol dimethacrylate, triethylene glycol dimethacrylate, triethylene glycol diacrylate, tripropylene glycol dimethacrylate, 1,3-butanediol dimethacrylate, 1,4-butanediol dimethacrylate, 1,10-dodecanediol dimethacrylate, 1,6-hexandieol dimethacrylate, neopentylglycol dimethacrylate, and polybutylene glycol dimethacrylate.

Preferred acrylates **A** with a functionality of 3 or higher include glycerol triacrylate, pentaerythritol triacrylate, pentaerythritol trimethacrylate, trimethylolpropane triacrylate, trimethylolpropane trimethacrylate, tetramethylolmethane tetraacrylate, Di-(trimethylolpropane) tetraacrylate, pentraerythritol tetraacrylate, dipentaerythritol pentaacrylate, dipentaerythritol hexaacrylate, tri(2-methacryloxyethyl) trimellitate, tri(2-acryloxyethyl) isocyanurate, as well as their ethoxylated or propoxylated derivates.

Further preferred acrylates include highly functional, hyperbranched acrylates with functionalities of between 6 and 16, or higher. Examples of such preferred acrylates include hyperbranched polyester-polyacrylates, for example Sartomer® CN2303 and Sartomer® CN2305, both by Arkema.

Preferably, the composition contains less than 2 wt.-% of a phenolic resin, based on the total weight of the composition.
More preferably, the composition contains less than 1 wt.-%, less than 0.5 wt.-%, less than 0.1 wt.-%, less than 0.01 wt.-%, most preferably 0 wt.-%, of a phenolic resin, based on the total weight of the composition.
Such phenolic resins may be phenol-formaldehyde resole based resins. These phenolic resins are made by a reaction of formaldehyde with phenol and substituted phenol. The phenol-formaldehyde resins may result from a polymerization using an alkaline catalyst and excess formaldehyde, resulting in chemical structures that have methyl side and/or end groups. Those skilled in the art refer to these types of phenol-formaldehyde resins as resoles.
One exemplary resole based phenolic resin is sold commercially under the trade name SP-1045 by the SI Group, Inc., Schenectady, USA.

Preferably, the composition contains less than 5 wt.-% of a component selected from the group consisting of low density polyethylenes (LDPE) and linear low density polyethylenes (LLDPE), based on the total weight of the composition.

More preferably, the composition contains less than 2 wt.-%, less than 1 wt.-%, less than 0.5 wt.-%, less than 0.1 wt.-%, less than 0.01 wt.-%, most preferably 0 wt.-%, of a component selected from the group consisting of LDPE and LLDPE, based on the total weight of the composition.

A component selected from the group consisting of low density polyethylenes (LDPE) and linear low density polyethylenes (LLDPE).

Preferred molecular weight ranges are for LDPE 150'000 to 400'000 g/mol and for LLDPE 100'000 to 200'000 g/mol. All these molecular weight values refer to MW measurements done at 140 °C in 1,2,4-trichlorobenzene with a flow of 1 mL/min and relative to polystyrene standard.

Exemplary commercially available LDPEs include 621i, 772, 993i, and 1017 from Dow Chemical and LD100 BW from ExxonMobil. Exemplary commercially available LLDPEs include LL1102 from ExxonMobil.

It is advantageous for the present invention to use an activator, accelerator, or catalyst in combination with the blowing agent. Examples of compounds suitable for this purpose include zinc compounds, such as zinc oxide, zinc stearate, zinc bis(p-toluenesulphinate), or zinc bis(benzenesulphinate), or magnesium oxide, and/or (modified) urea compounds. Most preferred are zinc compounds, especially zinc oxide.

The inventive thermally expandable composition preferably comprises such an activator for said blowing agent with an amount of between 0.5 and 4 wt.-%, preferably between 1 and 3 wt.-%, based on the total weight of the composition.

Apart from the essential ingredients, the present inventive thermally expandable composition may contain other components commonly used in such compositions and known to the ordinarily skilled artisan in the field. These include, for example, fillers, colorants, dispersion aids or homogenizers, adhesion promoters, antioxidants, stabilizers, and the like.

Suitable as fillers are, e.g., ground or precipitated calcium carbonate, calcium-magnesium carbonate, talcum, gypsum, graphite, barite, silica, silicates, mica, wollastonite, carbon black, or the mixtures thereof, or the like.

Fillers are, if at all, preferably incorporated in the inventive compositions with an amount of between 1 and 15 wt.-%, based on the total weight of the composition.

Colorants or dyes, such as pigments, e.g. on the basis of carbon black, may be included in the present inventive compositions. Their amount is preferably between 0 and 1 wt.-%, based on the total weight of the composition.

Further potentially useful additives include antioxidants and stabilizers, commonly used in polymer-based compositions and known to the person skilled in the art of polymer-based composition formulation. Examples of suitable antioxidants and stabilizers include sterically hindered thioethers, sterically hindered aromatic amines, and/or sterically hindered phenols, such as bis(3,3-bis(4'-hydroxy-3-t-butylphenyl)butanoic acid) glycol ester. Such substances are preferably included with an amount of between 0 and 0.5 wt.-%, preferably between 0.1 and 0.3 wt.-%, based on the total weight of the composition.

The compositions according to the present inventions can be manufactured by mixing the components in any suitable mixing apparatus, e.g. in a dispersion mixer, planetary mixer, double screw mixer, continuous mixer, extruder, or dual screw extruder.

It may be advantageous to heat the components before or during mixing, either by applying external heat sources or by friction generated by the mixing process itself, in order to facilitate processing of the components into a homogeneous mixture by decreasing viscosities and/or melting of individual components. However, care has to be taken, e.g. by temperature monitoring and use of cooling devices where appropriate, not to exceed the activation temperatures of the blowing agent and/or peroxide. The final composition is preferably essentially solid at room temperature (23°C), meaning that it does not visibly deform at this temperature just by means of gravity during at least 24 h.

After mixing, the resulting composition may be shaped into its desired form by, e.g., extruding, blow-moulding, pelleting, injection moulding, compression moulding, punching or stamping or any other suitable process.

The thermally expandable compositions may be produced in a substantially one-step process, involving the addition of all components in a series and/or simultaneously. However, it may also be advantageous to formulate the composition as a two-part system, or even multipart system, and mix these parts into the final composition at a later stage. Such an approach may, for example, increase shelf life of the composition in places with demanding conditions (such as extraordinarily high temperatures), optimise storage room demand and transport weight, and allow for tailor-made, modular compositions regarding different applications.

The expansion of the thermally expandable composition according to the present invention is triggered by heat. This means, both the blowing agent and the a free-radical initiator component are activated by a thermal process that exceeds their respective activation temperature and exhibits a duration long enough for both processes (free-radical initiator-initiated radical polymerisation and decomposition of the blowing agent including gas formation) to proceed until the expandable material has expanded and cured into its intended final (sufficiently expanded and stable) state.

Another aspect of the present invention is the use of such thermally expandable compositions for the manufacturing of baffle elements. Such elements are used to seal and/or baffle open or hollow structures, e.g. a cavity in an open or hollow structural part of an automobile. Hollow parts in cars may include body components (e.g., panels), frame components (e.g., hydroformed tubes), pillar structures (e.g., A, B, C, or D-pillars), bumpers or the like. Open parts in cars may include roofs or doors.

Hence these baffle elements can be used in the construction of modes of transport, for example in the automobile industry, or in the production of white goods.

Another aspect of the present invention is a baffle element for open and hollow structures, wherein said element comprises a thermally expandable composition as described before.

Preferably, the baffle element does not comprise an additional adhesive layer. This is advantageous especially if the baffle element is uses on uneven substrates, since delamination of such an adhesive layer from the expandable composition cannot occur. Possible adhesives are for example rubber based adhesives.

Preferably, the baffle element does not comprise an additional carrier element on which the inventive thermally expandable composition is deposited or attached.
Said carrier element may consist of any material that can be processed into a shape useable for the thermally expandable composition to be deposited on or attached to.
Possible materials are polymeric materials, such as a plastic, elastomers, thermoplastics, thermosettable polymers, a blend or other combination thereof. Other suitable materials include metals, especially aluminium or steel. Also glassy or ceramic materials can be used. It is possible to use any combination of such materials.
It is also contemplated that such materials can be filled (e.g. with fibres, minerals, clays, silicates, carbonates, combinations thereof or the like) or foamed.
Such carrier element can further exhibit any shape or geometry. It can also consist of several, not directly connected parts. For example, it can be massive, hollow, or foamed, or it can exhibit a grid-like structure. The surface of the carrier element can typically be smooth, rough, or structured, according to the intended use of the baffle and/or reinforcement element.
Further, the carrier can have a sheet-like structure with a thickness of 0.5 to 5 mm, 0.5 to 3 mm, 0.5 to 2 mm, preferably 0.75 to 1.5 mm.

It can be advantageous if the baffle element comprises a detachable protective layer (especially release liner or release paper) that is placed directly on the inventive thermally expandable composition. Such a protective layer prevents sticking of baffle element during production, storage or transport before they are placed on the intended substrate. Such a detachable protective layer typically comprises silicone and materials that have a low surface energy. Preferably they comprise components such as described as "release agents" in the Römpp Chemie Lexikon, online version, Georg Thieme Verlag, retrieved on 08 October 2018.
Such a detachable protective layer should be easily removable by hand before placing the baffle element on the intended substrate.
Typically, such a detachable protective layer has a sheet-like structure with a thickness of 10 to 300 µm, 15 to 200 µm, preferably 20 to 150 µm. Further, it is preferred if the detachable protective layer has a width and length that is more than 80%, most preferably more than 90%, especially preferred 100%, of the width and length of the sheet-like structure of the thermally expandable composition.

It can be further advantageous if the baffle element comprises a non-detachable protective layer that is placed directly on the inventive thermally expandable composition, preferably on the opposing side of the before mentioned detachable protective layer. Such a protective layer prevents sticking of baffle element during production, storage or transport before they are placed on the intended substrate.
Such a non-detachable protective layer typically consist of materials like EVA-based compositions, commercially available as handling films from the company Promaflex Industrial Ltda (BR) or PO EAA-based compositions, commercially available as PO EAA-based handling film from the company Protechnic (FR). Preferably they do not comprise components such as described as "release agents" in the Römpp Chemie Lexikon, online version, Georg Thieme Verlag, retrieved on 08 October 2018.
Such a non-detachable protective layer should be easily meltable at temperatures higher than 100 °C when the baffle is placed in the oven for expanding/curing and should be absorbable by the inventive thermally expandable composition so that the material of the non-detachable protective layer does not interfere with the adhesion of the foamed expanded composition when it makes contact with the sides/walls of the hollow structure to be sealed/baffled.

Typically, such a non-detachable protective layer has a sheet-like structure with a thickness of 10 to 300 µm, 15 to 200 µm, preferably 20 to 150 µm. Further, it is preferred if the detachable protective layer has a width and length that is more than 80%, most preferably more than 90%, especially preferred 100%, of the width and length of the sheet-like structure of the thermally expandable composition.

Most preferably, the baffle element is made entirely or the thermally expandable composition, whereby this baffle element can contain a detachable and/or, preferably and, a non-detachable protective layer as mentioned before.

In one preferred embodiment, such a baffle element for open and hollow structures consists essentially, preferably exclusively, of a thermally expandable composition, whereby this baffle element can contain a detachable protective layer as mentioned before. In this case, it is advantageous to design the shape of the element in a way that it can be easily fitted into and attached to the walls of the open or hollow structure to be baffled and/or reinforced.

Preferably, the thermally expandable composition has a sheet-like structure with a thickness of 0.5 to 10 mm, preferably 1 to 6 mm.

It may be further advantageous if the thermally expandable composition has a sheet-like structure with a length of 5 to 30 cm, preferably 10 to 25 cm and a width of 5 to 30 cm, preferably 5 to 15 cm. With such a form the element is especially suited to seal or baffle larger areas, e.g. as patches. In case the element has a width of 1 to 20 cm, preferably 2 to 10 cm, the element is especially suited to be used as stripes to seal or baffle.

Manufacturing is in this case preferably done by injection moulding, punching or stamping, or extrusion through a shape template.

The manufacturing process of a baffle element in accordance with the present invention can be injection-moulding process or a co-extrusion process of the thermally expandable composition.

Another aspect of the present invention is the use of the baffle element as described above to seal or baffle a cavity or hollow or open structure of a land-, water-, or air-vehicle, preferably an automotive vehicle, and/or a cavity of a building such that the transmission of noise, vibrations, humidity, and/or heat is reduced.

A further aspect of the present invention is a method for sealing or baffling a cavity or hollow structure, characterised in that an element comprising a thermally expandable composition according as described above is introduced into said cavity or hollow structure and subsequently thermally expanded such that said cavity or hollow structure is at least partially filled by the expanded composition.

The cavity or hollow structure preferably consists of metal, however heat-resistant plastics are also possible. Preferably the substrates are are metal substrates, especially sheets, of steel, especially electrolytically galvanized steel, hot-dip galvanized steel, bonazinc-coated steel, and subsequently phosphated steel, and also aluminium, especially in the variants that typically occur in automaking, and also magnesium or magnesium alloys. Preferably these metal substrates are oiled substrates meaning they are covered with corrosion protection oils known to the person skilled in the art. An example of such a corrosion protection oil is Anticorit PL 3802-39S.

Preferred temperature for the thermal expansion process is between 110°C and 220°C, 120 and 210°C, preferably 140 and 200°C. Preferred baking time for the compositions is between 5 min and 90 min, preferably 10 and 60 min, more preferably 15 and 30 min.

The invention is further explained in the following experimental part which, however, shall not be construed as limiting the scope of the invention.

### Examples

### 1. Formulation of example compositions

### 1.1 Compositions

Examples of inventive compositions (E1 to E6) and non-inventive reference compositions (R1 to R5) were prepared according to the procedure shown below. The exact individual compositions in wt.-%, based on the total weight of the individual respective composition, are listed in Table 2.

Details on the ingredients used in the inventive example compositions E1 to E6 and non-inventive reference compositions R1 to R5 described herein are listed in Table 1.

**Table 1: Details on the ingredients and their trade names used in the inventive and non-inventive example compositions in this document.**

| ***Ingredient*** | **Description** |
|---|---|
| *Polymer P1* | Ethylene-vinyl acetate (EVA) with 18 wt.-% vinyl acetate monomer and a melt flow index (MFI) of 150 g/10 min (ATSM D1238) |
| *Polymer P2* | EVA with 28 wt.-% vinyl acetate monomer and MFI of 6 g/10 min (ATSM D1238) |
| *Polymer P3* | Random copolymer of Ethylene and Glycidyl Methacrylate with 8 wt.-% glycidyl methacrylate content (IRTF) and MFI of 5 g/10 min (ATSM D1238) |
| *BR* | Bromobutyl Rubber (BIIR), Mooney 32 MU (ML (1+8) 125°C, ISO 289/ASTM D1646), Halogen content [mol%] 1.8. |
| *EP Rubber* | Crystalline ethylene-propylene rubber with ENB (ethylidene norbornene), Mooney 61 MU (ML (1+4) 125°C, ISO 289), 6.3 wt.-% ENB content (ASTM D 6047), 65.6 wt.-% Ethylene content (ASTM D 3900) |
| Paraffinic oil | Paraffinic oil |
| *PO* | Polyisobutylene polymer, Average MW 1300 g/mol, Kinematic Viscosity cSt (ASTM D445) at 40 °C 20'000-22'000. |
| *Tackifier 1* | Hydrocarbon resin, C5, Ring & Ball Softening Point 94 °C (ASTM E28). |
| *Tackifier 2* | Hydrocarbon resin, C9, Softening Point 75 - 86 °C (ASTM D 6493). |
| *Peroxide* | Mixture of 1,4-bis[1-(tert-butylperoxy)-1-methylethyl]benzene and 1,1-Di(t-butylperoxy)-3,3,5 - trimethylcyclohexane |
| *Blowing agent* | Azodicarbonamide |
| *Activator* | Zinc oxide |
| *Acrylate* | Dipentaerythritol pentaacrylate, |
| *Antioxidant* | Tetrakis[methylene-3(3',5'-di-tert-butyl-4'-hydroxyphenyl)propionate]methane |
| *Curing agent* | Dicyandiamide, latent curing agent, |
| *Thixotropic agent* | Fumed silica |
| *Pigment* | Carbon black |
| *Filler* | Calcium carbonate |

### 1.2 Mixing and moulding procedure

All inventive and non-inventive example compositions in this document were prepared according to the following procedure:
In a first step, polymer P1, P2, P3, BR antioxidant and tackifier were mixed and melted at 110°C with a mixing rate of 36 rpm (rounds per minute) during 7 min (minutes). After this, half of the amount of PO together with thixotropic agent, carbon black and filler were mixed for the same speed and time adopted on the first step. The temperature of the mixture was set to 85°C and blowing agent and activator were added. Mixing was continued at 36 rpm for 5 min by cooling the mixture cooled to a temperature of 75°C. Then, the curing agent, acrylate A, peroxide together with the second half of the PO were added and followed by mixing at 36 rpm for 5 min.
300 g of this mixture was take out, placed between release paper and pressed for 15 seconds with an electrical press at a temperature of 50°C and a pressure of 60 bar to sheets with a thickness of 2mm. These sheets were subsequently cut to 100 x 10 mm x 2 mm coupons (samples) and further tested.

### 2 Testing of example compositions

### 2.1 Expansion stability

Expansion and expansion stability was tested in all samples by heat treatment (baking) of the individual samples at various temperatures during 20 min in an preheated oven at 180 °C.

Expansions were quantified for each sample by measuring the density before and after expansion. The densities were determined according to DIN EN ISO 1183 using the water immersion method (Archimedes principle) in deionised water and a precision balance to measure the mass. It is further noteworthy that the cured foam of the inventive compositions showed an elastic behaviour upon application of pressure. If pressure, e.g. pressing with a thumb, was applied on the foam the foam regained its original form and size within seconds upon release of the pressure. Hence the inventive compositions complete shape recovery when pressed with a thumb, exerting a pressure of 5 kg for 1 second at room temperature. Composition E1 was found to have a consistence according to JIS K 6830 of 12 1/10mm.

### 2.2 Adhesion properties

In order to assess the adhesion properties, the above mentioned coupons were placed in the middle a carrier plate 300 x 30 mm, thickness 0.8 mm, steel, cleaned and then oiled with Anticorit PL 3802-39S) and firmly pressed onto the carrier plate.
Such a sample was then bend into a 90° angle in order to assess if the coupon would adhere on the carrier plate in the uncured/unexpanded state. The results are shown in table 2 under "Adhesion to bent oiled steel uncured"; adhering coupons are marked with (+), coupons failing to stick to the metal carrier are marked with (-).

Another of these samples was cured for 20 min at 180 °C and then bend into a 90° angle in order to assess if the coupon would adhere on the carrier plate in the cured/expanded state. The results are shown in table 2 under "Adhesion to bent oiled steel cured"; adhering expanded coupons are marked with (+), expanded coupons failing to stick to the metal carrier are marked with (-).

### Fracture pattern:

Another of these samples was cured for 20 min at 180 °C and then the cured/expanded composition was torn from the carrier plate by hand. The following visual assessment of the obtained fracture appearance was used: The results were divided into "cohesive" (cohesive fracture) and "adhesive" (adhesive fracture) whereby a cohesive fracture pattern is preferred.

### 2.3 Cell structure, expansion behaviour and buckling.

In order to assess the cell structure, the expansion and buckling behaviour, the samples mentioned above were cured for 20 min at 180 °C and the obtained cured/expanded composition on the carrier plate was visually analysed.

Buckling: In case the cured/expanded composition was detached from the carrier plate, the sample was rated "buckling", is no detachment occurred during the bake process, the sample was rated "none".

Cell structure: In case the cured/expanded composition had a closed cell structure at the surface with a small cell-size as well as uniform average cell size and uniform distribution (throughout the foam) of the cells, the sample was rated "(+)".

If the cured/expanded composition had an open cell structure at the surface with larger cell-size, a non-uniform average cell size and non-uniform distribution (throughout the foam) of the cells, the sample was rated "(-)". In-between structures were rated "(+/-)".

Expansion (horizontal expansion/vertical expansion): The cured/expanded composition was assessed by its horizontal expansion behaviour as well as its vertical expansion behaviour.

In case the horizontal expansion (away from metal carrier) was uniform/even, the sample was rated "(uni)", if the cell structure was wavy/un-uniform, the sample was rated "(wavy, respectively little wavy)".

In case the vertical/lateral expansion (along the metal carrier) was unidirectional/even, the sample was rated "(dir)", if the cell structure was non-directional/uneven, the sample was rated "(undir)".

**Table 2: Detailed compositions in wt.-% of ingredients based on the total weight of the compositions.**

| Ingredient (wt.-%) | **E1** | **R1** | **R2** | **E2** | **E3** | **E4** | **E5** | **R3** | **E6** | **R4** | **R5** |
|---|---|---|---|---|---|---|---|---|---|---|---|
| EP Rubber | 0 | 9 | | | | | | 0 | 0 | 0 | 0 |
| Polymer P1 | 6 | 6 | 6 | 6 | 6 | 6 | 6 | 6 | 6 | 6 | 6 |
| Polymer P2 | 11 | 11 | 11 | 11 | 11 | 11 | 11 | 11 | 11 | 11 | 11 |
| Polymer P3 | 5 | 5 | 5 | 5 | 5 | 5 | 5 | 5 | 5 | 5 | 5 |
| BR | 9 | 0 | 9 | 9 | 9 | 9 | 9 | 9 | 9 | 2 | 18 |
| Paraffinic oil | | | | | | | 27 | | | | |
| PO | 27 | 27 | 27 | 27 | 27 | 24 | 0 | 27 | 27 | 27 | 27 |
| Tackifier 1 | 19 | 19 | 0 | 0 | 15 | 19 | 19 | 19 | 19 | 19 | 19 |
| Tackifier 2 | | | | 19 | | | | | | | |
| Peroxide | 2.15 | 2.15 | 2.15 | 2.15 | 2.15 | 2.15 | 2.15 | 2.15 | 2.15 | 2.15 | 2.15 |
| Activator | 2 | 2 | 2 | 2 | 2 | 2 | 2 | 2 | 2 | 2 | 2 |
| Blowing agent | 5 | 5 | 5 | 5 | 5 | 5 | 5 | 10 | 2 | 5 | 5 |
| Acrylate | 0.4 | 0.4 | 0.4 | 0.4 | 0.4 | 0.4 | 0.4 | 0.4 | 0.4 | 0.4 | 0.4 |
| Antioxidant | 0.75 | 0.75 | 0.75 | 0.75 | 0.75 | 0.75 | 0.75 | 0.75 | 0.75 | 0.75 | 0.75 |
| Curing agent | 0.2 | 0.2 | 0.2 | 0.2 | 0.2 | 0.2 | 0.2 | 0.2 | 0.2 | 0.2 | 0.2 |
| Thixotropic agent | 1.8 | 1.8 | 1.8 | 1.8 | 1.8 | 1.8 | 1.8 | 1.8 | 1.8 | 1.8 | 1.8 |
| Pigment | 1.5 | 1.5 | 1.5 | 1.5 | 1.5 | 1.5 | 1.5 | 1.5 | 1.5 | 1.5 | 1.5 |
| Filler | 9.2 | 9.2 | 9.2 | 9.2 | 9.2 | 9.2 | 9.2 | 9.2 | 9.2 | 9.2 | 9.2 |
| Total (wt.-%) | 100 | 100 | 81 | 100 | 96 | 97 | 100 | 105 | 97 | 93 | 109 |
| Volume expansion (%) | 955 | 1020 | 1300 | 835 | 1165 | 1080 | 751 | 1585 | 445 | 885 | 1055 |
| Adhesion to bent oiled steel uncured | (++) | (-) | (-) | (+/-) | (++) | (+) | (++) | (++) | (++) | (-) | (++) |
| Adhesion to bent oiled steel cured | (+) | (+) | (-) | (+) | (+) | (+) | (+) | (+) | (+) | (+) | (+) |
| Cell structure | (+) | (+) | (+) | (+) | (+) | (+) | (-) | (-) | (+) | (-) | (+) |
| Expansion (uniformity/direction) | uni/ dir | wavy/ undir | wavy/ undir | bit wavy/ dir | uni/ dir | uni/ undir | wavy/ undir | wavy/ undir | uni/ dir | bit wavy/ dir | wavy/ undir |
| Buckling | none | none | buckling | none | little buckling | none | none | none | none | none | none |
| Fracture pattern | cohesive | adhesive | adhesive | cohesive | cohesive | cohesive | cohesive | cohesive | cohesive | cohesive | adhesive |

## Claims

1. Thermally expandable composition, comprising
(a) at least one polymer P, cross-linkable by a free-radical initiator, and
(b) at least one solid butyl rubber BR, whereby the composition comprises said solid butyl rubber with an amount of between 5 wt.-% and 16 wt.-%, preferably between 5 wt.-% and 15 wt.-%, 6 wt.-% and 12 wt.-%, 8 wt.-% and 10 wt.-%, based on the total weight of the composition, and
(c) at least one free-radical initiator, and
(d) at least one blowing agent, whereby the composition preferably comprises said blowing agent with an amount of less than 6 wt.-%, preferably between 1 wt.-% and 5.5 wt.-%, 2 wt.-% and 5 wt.-%, and
(e) at least one tackifier **TA,**
whereby the cured expanded composition has a volume increase compared to the uncured composition of less than 1300%, preferably between 500 - 1300%, more preferably 600 - 1200 %, 800 - 1200%, most preferably 900 - 1100%, whereby the volume increase is determined using the DIN EN ISO 1183 method of density measurement (Archimedes principle).

2. Thermally expandable composition of claim 1, **characterised in that** the composition comprises said tackifier with an amount of between 12 wt.-% and 30 wt.-%, 14 wt.-% and 25 wt.-%, 16 wt.-% and 22 wt.-%, preferably 17.5 wt.-% and 20 wt.-%, based on the total weight of the composition.

3. Thermally expandable composition of one of the preceding claims, **characterised in that** the tackifier is a hydrocarbon resin, preferably a aromatically modified hydrocarbon resin, most preferably a aromatically modified C5 hydrocarbon resin.

4. Thermally expandable composition of one of the preceding claims, **characterised in that** the composition further comprises at least one process oil **PO** selected from the group consisting of aromatic oil, naphthenic oil or poly(iso)butylene, preferably poly(iso)butylene, most preferably polyisobutylene.

5. Thermally expandable composition according to claim 4, **characterised in that** the composition comprises the process oil **PO** with an amount of between 18 wt.-% and 35 wt.-%, preferably between 20 wt.-% and 32 wt.-%, most preferably between 25 wt.-% and 30 wt.-%, based on the total weight of the composition.

6. Thermally expandable composition of one of the preceding claims, **characterised in that** the blowing agent is azodicarbonamide.

7. Thermally expandable composition of one of the preceding claims, **characterised in that** the composition comprises the blowing agent with an amount of between 2.5 wt.-% and 6 wt.-%, preferably between 3 wt.-% and 5.5 wt.-%, between 3.5 wt.-% and 5 wt.-%, between 4 wt.-% and 5 wt.-%, most preferably between 4.5 wt.-% and 5 wt.-%.

8. Thermally expandable composition of one of the preceding claims, **characterised in that** said free-radical initiator is a peroxide or a perester, preferably a peroxide.

9. Thermally expandable composition of one of the preceding claims, **characterised in that** the composition further comprises at least one acrylate **A.**

10. Thermally expandable composition of one of the preceding claims, **characterised in that** the at least one solid butyl rubber **BR** is a halogenated butyl rubber, preferably a chlorinated butyl rubber or a brominated butyl rubber, especially preferred a brominated butyl rubber.

11. Baffle element for open or hollow structures, **characterised in that** said element comprises a thermally expandable composition according to any of claims 1 to 10.

12. Baffle element of claim 11, **characterised in that** said thermally expandable composition has a sheet-like structure with a thickness of 0.5 to 10 mm, preferably 1 to 6 mm.

13. Baffle element of any of claim 11 or 12, **characterised in that** said thermally expandable composition has a sheet-like structure with a length of 5 to 30 cm, preferably 10 to 25 cm and a width of 5 to 30 cm, preferably 5 to 15 cm or a width of 1 to 20 cm, preferably 2 to 10 cm.

14. Use of the baffle element of one of the claims 11 - 13 to seal or baffle a cavity or hollow or open structure of a land-, water-, or air-vehicle, preferably an automotive vehicle, and/or a cavity of a building such that the transmission of noise, vibrations, humidity, and/or heat is reduced.

15. Method for sealing or baffling a cavity or hollow structure, **characterised in that** an element comprising a thermally expandable composition according to any of claims 1 -10 is introduced into said cavity or hollow structure and subsequently thermally expanded such that said cavity or hollow structure is at least partially filled by the expanded composition.
